# EUROPEAN PATENT APPLICATION

(11) **EP 3 754 519 A1**
(43) Date of publication of application: **23.12.2020**
(21) Application number: 20179633.1
(22) Date of filing: 12.06.2020
(51) Int. Cl.: G06F 16/908

(54) **SYSTEM AND METHOD FOR IDENTIFYING TARGET APPLICATION FOR RECEIVING INFORMATION RELATED TO SUBJECT APPLICATION**

(30) Priority: 18.06.2019 FI 20195529; 28.06.2019 FI 20195585
(71) Applicant: GameRefinery OY, 00180 Helsinki (FI)
(72) Inventor: Heikkinen, Lauri, 00840 Helsinki (FI); Julkunen, Veli-Pekka, 02270 Espoo (FI)
(74) Representative: Aaltonen, Janne Lari Antero

(57) **Abstract**

Disclosed is a method and system for identifying at least one target application (304A, 304B, 304C, 304D) for receiving information related to a subject application (302). The method comprises selecting a group of applications (304A, 304B, 304C, 304D, 304E, 304F) from a database arrangement (204); analysing the subject application and each of the applications in the group of applications to identify features related thereto; mapping the subject application and each of the applications in the group of applications in a multi-dimensional space based on the identified features thereof; calculating, in the multi-dimensional space, a distance value of each of the applications in the group of applications from the subject application using a distance metric; selecting, from the group of applications, the at least one target application having the distance value below a predetermined threshold; and controlling display of the information related to the subject application on a user device (206) using the at least one target application.

## Description

### TECHNICAL FIELD

The present disclosure relates generally to sharing of information; and more specifically, to methods of identifying target applications for receiving information related to subject applications. Moreover, the present disclosure also relates to systems for identifying target applications for receiving information related to subject applications.

### BACKGROUND

With advancements in technology, availability of portable personal computing devices has increased substantially. In recent times, ownership of a personal computing device has become significantly commonplace. Such computing devices generally have several software applications such as applications for gaming, education, photography, shopping, installed thereon. The users of such computing devices can further obtain additional software applications from publicly-accessible digital distribution platforms, for example, such as Google Play@, the App Store@ (for iOS®) and the like, generally without incurring any additional cost. However, such software applications generally comprise spaces for promotional content (such as advertisements for websites, other software applications and the like) in their user interface. Such promotional content provided on the software applications installed on user's computing device, play an instrumental role in directing user traffic to the promoted content.

Notably, in order to optimise the user experience and increase user traffic to the promoted content, providing promotional content that is relevant to the user is paramount. In other words, providing relevant promotional content to the user on their computing device may significantly improve user experience and further increases, for example, probability of the user downloading the promoted software application or visiting the promoted website. Since the advertisement space in a software application is limited, an efficient utilization of available advertisement space inventory is necessary. Furthermore, providing irrelevant promotional content is counter-productive for both the user and the advertiser as the user is subjected to promotional content that is irrelevant therefor and the advertiser's resources are being utilised ineffectively.

Presently, there are several techniques employed to determine targeted user base for broadcasting the promotional content. The present techniques employ knowledge and skills of expert professionals to determine the targeted user base or target applications for advertisement. Alternatively, pre-defined categories that each application is classified into by the software developer when the software application is made available in the publicly-accessible digital distribution platforms are used. However, such categorization of software applications relies on subjective judgement of the application developer and the category determined by the application developer may not be relevant from perspective of the user. Furthermore, targeting specific promotional content based on user's activity on the computing device involves using personal data of the user such as age, location, downloaded applications, behavior in different websites, the type of computing device used thereby. However, an increasing number of users are opting to restrict access of such data owing to an increasing concern regarding privacy.

As a result of the limitations associated with present techniques, the process involved in determining targeted user-base for promotional content is resource intensive. A processor used for processing promotional content runs on high computational load which reduces performance of the processor. Consequently, an efficient utilisation of such computation load is essential. Moreover, retrieval of irrelevant advertisements makes the process memory intensive. Specifically, irrelevant advertisements lead to inefficient usage of random-access memory of the processor resulting in unavailability of memory for performing other tasks of the processor, thereby reducing computational speed of the processor.

Therefore, in the light of foregoing discussion, there exists a need to overcome the aforementioned drawbacks associated with sharing of information related to advertisements.

### SUMMARY

The present disclosure seeks to provide a method of identifying at least one target application for receiving information related to a subject application. The present disclosure also seeks to provide a system for identifying at least one target application for receiving information related to a subject application.

The present disclosure seeks to provide a solution to the existing problem of irrelevant advertisement content owing to inefficient target-based advertising, as the target-based advertising is based on manual judgement and subjective pre-defined categories. An aim of the present disclosure is to provide a solution that overcomes at least partially the problems encountered in prior art, and provides a system and method that enables targeted advertisement of a software application based on features of the subject application and target application.

In one aspect, an embodiment of the present disclosure provides a method of identifying at least one target application for receiving information related to a subject application, wherein the subject application is to be promoted onto the at least one target application, the method comprising
- selecting a group of applications from a database arrangement;
- analysing the subject application and each of the applications in the group of applications to identify features related thereto;
- mapping the subject application and each of the applications in the group of applications in a multi-dimensional space based on the identified features thereof;
- calculating, in the multi-dimensional space, a distance value of each of the applications in the group of applications from the subject application using a distance metric;
- selecting, from the group of applications, the at least one target application having the distance value below a predetermined threshold; and
- controlling display of the information related to the subject application on a user device using the at least one target application.

In another aspect, an embodiment of the present disclosure provides a system for identifying at least one target application for receiving information related to a subject application, wherein the subject application is to be promoted onto the at least one target application, the system comprising a data processing arrangement, wherein the data processing arrangement is operable to:
- select a group of applications from a database arrangement;
- analyse the subject application and each of the applications in the group of applications to identify features related thereto;
- map the subject application and each of the applications in the group of applications in a multi-dimensional space based on the identified features thereof;
- calculate, in the multi-dimensional space, a distance value of each of the applications in the group of applications from the subject application using a distance metric;
- select, from the group of applications, the at least one target application having the distance value below a predetermined threshold; and
- control display of the information related to the subject application on a user device using the at least one target application.

Embodiments of the present disclosure substantially eliminate or at least partially address the aforementioned problems in the prior art, and enables targeted advertisement relevant to the user based on features associated with software applications employed by the user, and further tracks performance of provided advertisements for optimal operation thereof.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
- FIG. 1: is an illustration of steps of a method of identifying at least one target application for receiving information related to a subject application, in accordance with an embodiment of the present disclosure;
- FIG. 2: is a block diagram of a network environment, wherein a system for identifying at least one target application for receiving information related to a subject application is implemented, in accordance with an embodiment of the present disclosure; and
- FIG. 3: is an exemplary illustration of mapping of a subject application and the group of applications in a multi-dimensional space, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides a method of identifying at least one target application for receiving information related to a subject application, wherein the subject application is to be promoted onto the at least one target application, the method comprising
- selecting a group of applications from a database arrangement;
- analysing the subject application and each of the applications in the group of applications to identify features related thereto;
- mapping the subject application and each of the applications in the group of applications in a multi-dimensional space based on the identified features thereof;
- calculating, in the multi-dimensional space, a distance value of each of the applications in the group of applications from the subject application using a distance metric;
- selecting, from the group of applications, the at least one target application having the distance value below a predetermined threshold; and
- controlling display of the information related to the subject application on a user device using the at least one target application.

In another aspect, an embodiment of the present disclosure provides a system for identifying at least one target application for receiving information related to a subject application, wherein the subject application is to be promoted onto the at least one target application, the system comprising a data processing arrangement, wherein the data processing arrangement is operable to:
- select a group of applications from a database arrangement;
- analyse the subject application and each of the applications in the group of applications to identify features related thereto;
- map the subject application and each of the applications in the group of applications in a multi-dimensional space based on the identified features thereof;
- calculate, in the multi-dimensional space, a distance value of each of the applications in the group of applications from the subject application using a distance metric;
- select, from the group of applications, the at least one target application having the distance value below a predetermined threshold; and
- control display of the information related to the subject application on a user device using the at least one target application.

The present disclosure provides the aforesaid method and system to promote a subject software application on a target software application that is being used by a user. Specifically, the method comprises categorisation, weighing and analysis of features associated with the target application and the subject application that is intended to be promoted onto the target application. Subsequently, if the features associated with the subject application are closely mapped with the features associated with the target application, then the subject software application is promoted on the target software application. Furthermore, receiving such relevant promotional content that depends on features of the target application (hence, similar), enhances a user experience of the user of the target application. Beneficially, such process of relevant promotions eliminates reliability of promotion of software applications on subjective human judgements provided by for example, a developer, a player, and an expert. It will be appreciated that high impact of such relevant promotions will further provide higher value to an advertiser (herein, an advertiser of the subject application). In this regard, relevant promotion of the subject application allows the advertiser thereof, to reach specific users (herein, user of the target application) at a right time and in a right context, without overspending and/or wastage of advertisement space inventory. Beneficially, the method as described in the present disclosure is operated to provide relevant promotional content to a user without acquiring any personal information from the user, thereby preventing any security threats associated with the personal information of the user. Moreover, the method described herein tracks a performance of the target applications, by tracking an action performed on promotional content provided (for example, action of the user of the target software application on the subject software application) and further calibrates itself, to enhance performance thereof. Furthermore, the method can be integrated with current target-advertising methods to further improve their efficiency.

The present disclosure provides the method for identifying at least one target application for receiving information related to the subject application. The present disclosure also provides a system for identifying the at least one target application for receiving information related to the subject application. The system is a collection of one or more interconnected programmable and/or non-programmable components configured to receive the information related to the subject application, identify and select at least one target application, and transmit the information to the target application. Furthermore, the information related to the subject application is transmitted to the at least one target application to enable at least one of but not limited to storing the information, displaying the information, replicating the information, simulating the information, and recreating the information, in the at least one target application. It will be appreciated that the at least one target application is selected from a collection of applications. Herein, the *"at least one target application"* and *"subject application"* are referred as the term *"application"* for the sake of simplicity.

Throughout the present disclosure, the term *"application"* refers to any collection or set of instructions executable by a computer or other digital system so as to configure the computer or the digital system to perform a task that is the intent of the application. Generally, the application is configured on a computing device by way of an application programming interface (API) operable to access functions and features of an operating system of the computing device. Such application is organized in various ways, for example the application includes software components organized as libraries, internet-based programs stored on a remote server or so forth, source code, interpretive code, object code, directly executable code, and so forth. Optionally, the application may invoke system-level code or calls to other application residing on a server or other location to perform certain functions. Furthermore, the application may be pre-configured and pre-integrated with the operating system of the computing device, building a software appliance. Optionally, the application is a package such as an android application package (apk) file. Optionally, each application is associated with features (namely, properties and characteristics) which are unique to the application.

Optionally, the application may be at least one of: web-based applications, android-based applications, iOS-based applications. Optionally, the application is associated with a specific category. The category could be, for example, such as art and design, augmented reality, auto and vehicles, beauty, books and reference, business, comics, communication, dating, education, entertainment, events, family, finance, food and drink, gaming, health and fitness, house and home, libraries and demo, lifestyle, maps and navigation, medical, music and audio, news and magazines, parenting, personalization, photography, productivity, shopping, social, sports, tools, travel and local, video players and editors, and weather. Moreover, optionally, the application is associated with a sub-category within the category. The category and the sub-category could be assigned by a developer of the application, a publisher of the application or users of the application.

Optionally, the application is implemented on user devices such as cellular phones, personal digital assistants (PDAs), handheld devices, wireless modems, laptop computers, personal computers and the like. Optionally, the user devices comprise programmable and/or non-programmable components to enable the user devices to employ the application. Optionally, the user devices are operable to receive the application from a trusted third party such as a publicly-accessible digital distribution platform, for example, such as Google Play@, the App Store@ (for iOS®) and the like. More optionally, the user devices are operable to download the application from publicly-accessible digital distribution platform.

Throughout the present disclosure, the term *"subject application"* refers to an application that is to be promoted onto the target application. Thus, the subject application is an application related to which information is to be transmitted to the at least one target application for promoting the subject application onto the at least one target application. Specifically, the information is transmitted to the at least one target application to enable at least one of storing the information, displaying the information, replicating the information, simulating the information, and recreating the information, in the at least one target application.

Optionally, information related to the subject application is a data related to the subject application which is intended to be transmitted to the target application for usage by the target application for different purposes as discussed above. Optionally, the information related to the subject application is stored in a database. More optionally, the information related to the subject application is stored in an internal memory of a computing device, comprising the at least one target application, associated with a user. More optionally, the information related to the subject application is stored in publicly-accessible digital distribution platforms, for example, such as Google Play@, the App Store@ (for iOS®). Optionally, the information related to the subject application is a document comprising properties and/or characteristics of the subject application. Optionally, the information may be in at least one of data format such as text data, tabular data, image data, video data and audio data.

In an embodiment, the information relating to the subject application comprises promotional content for the subject application. The promotional content refers to information of the subject application employed for advertisement of the subject application on the at least one target application. Furthermore, the promotional content refers to information which promotes usage of the subject application on the user device having the at least one target application. Optionally, the promotional content is intended to enable a user operating the user device to download and use the subject application on the user device. In an example, the promotional content is a video of the subject application in operation. In another example, promotional content is an image of the subject application. In yet another application, the promotional content is a hyperlink to enable the user to be directed to the application store. It will be appreciated that the subject application and the group of applications are analysed to determine, from the group of applications, the at least one target application with similar properties and characteristics as the subject application. Consequently, the promotional content provided on the at least one target application with properties and characteristics similar to subject application will be more relevant to the user.

The system for identifying at least one target application the data processing arrangement. Throughout the present disclosure, the term *"data processing arrangement"* as used herein relates to a computational element that is operable to respond to and processes instructions that are operable to execute the method for identifying at least one target application. Optionally, the data processing arrangement includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the data processing arrangement may refer to one or more individual processors, processing devices and various elements associated with a processing device that may be shared by other processing devices. Additionally, the one or more individual processors, processing devices and elements are arranged in various architectures for responding to and processing the instructions that drive the system. Furthermore, the data processing arrangement includes hardware, software, firmware or a combination thereof. Optionally, the data processing arrangement includes functional components, for example, a processor, a memory, a network adapter and so forth.

The method of identifying at least one target application comprises selecting the group of applications from the database arrangement. The data processing arrangement is operable to select the group of applications stored in the database arrangement. Herein, the at least one target application is selected from the group of applications. In an instance, the group of applications may be applications installed on the computing device of a user. In such instance, the database arrangement may be the memory of the computing device of the user. In another instance, the group of applications may be the application on a publicly-accessible digital distribution platform, for example, such as Google Play@, the App Store@ (for iOS®) and the like. In such instance, the database arrangement may be the database associated with the publicly-accessible digital distribution platform.

Optionally, the group of applications are of a similar category as that of a category of the subject application. In an example, the category of the subject application is education. In such a case, the category of group of applications is also education. Optionally, the group of applications are selected to make processing performed by the data processing arrangement in subsequent steps, less resource intensive.

Pursuant to embodiments of the present disclosure, the group of applications need not belong to a similar sub-category as that of the sub-category of the subject application. At least one application in the group of applications could belong to a sub-category that is different from the sub-category of the subject application.

For illustration purposes only, there will now be considered an example implementation where the subject application and the group of applications belong to a same category "gaming". However, the subject application belongs to a sub-category "Platformer", whereas the group of applications comprise applications that belong to sub-categories "Platformer", "Driving", "Puzzle" and "Role-playing game". In such a case, the at least one target application can be identified to be an application (from the group of applications) that belongs to the sub-category "Puzzle".

Such an identification is performed by using the aforementioned multi-dimensional space for mapping the subject application to each of the applications in the group of applications based on their features, calculating the distance value between the subject application and each of the applications in the group of applications using the aforementioned distance metric, and selecting the at least one target application having the distance value below the predetermined threshold. Thus, the aforementioned method and system are capable of determining at least one target application that is similar to the subject application, even when the at least one target application belongs to a sub-category that is different from the sub-category of the subject application.

Throughout the present disclosure, the term *"database arrangement"* used herein relates to an organized body of digital information regardless of the manner in which the digital information or the organized body thereof is represented. Optionally, the database arrangement may be hardware, software, firmware and/or any combination thereof. For example, the organized body of related data may be in the form of a table, a map, a grid, a packet, a datagram, or in any other form. Optionally, the database arrangement may be the database associated with the publicly-accessible digital distribution platform. Alternatively, optionally, the database arrangement may be the memory of the computing device of the user.

Furthermore, the method comprises analysing the subject application and each of the applications in the group of applications to identify features related thereto. The data processing arrangement is operable to analyse the subject application and each of the applications in the group of applications to identify features related thereto. Throughout the present disclosure, the term *"features"* as used herein refers to attributes (namely, properties, characteristics of the application) associated with the applications, quantified in a manner such that each feature of a given application has a numerical value associated therewith. Features of a given application can be related to any attribute of the given application, for example, such as usage mechanics, content provided, visual appearance and others. The features could comprise at least one feature that makes the given application successful amongst users (which could be determined based on its performance at different application stores). The features could comprise at least one feature that users are interested in (which could be determined from user reviews and other statistics). It will be appreciated that the features are not dependent on categories or sub-categories to which the given application belong. Example of the features include, but are not limited to, interactive user interface, sound quality, visual effect, creativeness, ease of control, security, social interactivity, user feedbacks, ratings, storage space, internet or non-internet, internet data usage, battery consumption, optimization option, paid version or free version, user accessibility, data accuracy. In an example, the subject application may be a gaming application involving first-person shooting mechanism. In such example, a given application from the group of applications may be a gaming application involving puzzle solving. Consequently, the feature of first-person shooting may be quantified as a value of 8 (on a scale of 10), whereas the given application involving puzzle solving may be quantified as zero, for the feature of first-person shooting.

Moreover, the method comprises mapping the subject application and each of the applications in the group of applications in the multi-dimensional space based on the identified features thereof. The data processing arrangement is operable to map the subject application and each of the applications in the group of applications in the multi-dimensional space based on the identified features thereof. Throughout the present disclosure, the term *"multi-dimensional space"* refers to an embedding space, wherein relations are established and represented between the subject application and the group of applications based on the identified features. Optionally, the multi-dimensional space embeds the aforesaid applications such that value of each feature of each application is represented on a given dimension in the multi-dimensional space. Optionally, each feature employed in the multi-dimensional space has a relationship with each of the other features. Optionally, the subject application and each of the group of applications may be represented as nodes in the multi-dimensional space. Optionally, a plot of the subject application and the group of applications is made in the multi-dimensional space based on the identified features and the respective values of the features for the subject application and each application of the group of applications. Optionally, a dimensional space is selected based on the number of the identified features. In an example, five features are identified for the subject application and each of the group of applications, thereby a five-dimensional space is used for mapping the subject application and each of the applications in the group of applications.

Furthermore, the method comprises calculating, in the multi-dimensional space, the distance value of each of the applications in the group of applications from the subject application using the distance metric. The data processing arrangement is operable to calculate, in the multi-dimensional space, the distance value of each of the applications in the group of applications from the subject application. Throughout the present disclosure, the term "*distance value*" refers to a length of space between subject application and each of the group of applications in the multi-dimensional space. In other words, distance value is a measure of distance between the nodes of subject application and each of the group of applications. Notably, the distance value is a mathematical, numerical value. It will be appreciated that the distance value between two nodes in a multi-dimensional space is dependent upon the distance metric used to calculate the distance value between the nodes. Specifically, the distance metric provides a mathematical formula for calculating the distance value between two given nodes using the coordinates of the two given nodes. Therefore, such distance value may vary based on the distance metric used.

In an embodiment, the distance metric is one of a: Manhattan distance, Euclidean distance, Chebychev distance, Mahalanobis distance, cosine distance, Minkowski distance. Herein, the Manhattan distance between two nodes refers to the sum of the absolute differences of their Cartesian coordinates in the multi-dimensional space. The Manhattan distance function is employed to compute the distance that would be travelled to get from one node to the other node (herein, from subject application to a given application from the group of applications) if a grid-like path is followed. In other words, the Manhattan distance between two nodes is the sum of the horizontal and vertical distance components of the grid like path. Moreover, the Euclidean distance is a straight-line distance between two nodes in Euclidean space, wherein one node defines the subject application and the other node defines one of the applications in the group of applications. More optionally, the Euclidean space may be one dimensional, two dimensional, three dimensional or n-dimensional. Furthermore, the Chebyshev distance refers to a metric in a vector space wherein the distance between two vectors is the greatest of their differences along a given coordinate dimension. Moreover, the Mahalanobis distance is a measure of the distance between a given node and a distribution. Specifically, the Mahalanobis distance is used to determine outliers in a multivariate data. Notably, the cosine distance is a measure of similarity between two non-zero vectors of an inner product space that measures the cosine of the angle between them, wherein each of the nodes is represented as a non-zero vector. Herein, the Minkowski distance is a metric in a normed vector space which can be considered as a generalization of both the Euclidean distance and the Manhattan distance.

Moreover, the method comprises selecting, from the group of applications, the at least one target application having the distance value below the predetermined threshold. The data processing arrangement is operable to select, from the group of applications, the at least one target application having the distance value below a predetermined threshold. Throughout the present disclosure, the term "*predetermined threshold*" refers to a designated distance value that is used as a measure to determine the at least one target application for receiving information related to the subject application. Notably, the applications from the group of application lying within a distance value less than the predetermined threshold from the subject application are identified as the target applications for receiving information related to the subject application. It will be appreciated that every application of the group of application may not lie within a distance value less than the predetermined threshold and thus, may not be identified as a target application. In an instance, the predetermined threshold is predefined by a user of the system. In another instance, the predetermined threshold is a default value. Notably, the value of the predetermined threshold is determined based on the intended and desired reach of the information related to the subject application. Specifically, when the desired reach of the information related to the subject application may be high, the predetermined threshold may be designated as a higher value to identify a greater number of target applications for receiving the information. In an exemplary implementation, the subject application and the group of applications are mapped in a two-dimensional space. In such an implementation, a circle with a radius equal to the predetermined threshold and the node of subject application as the centre may be outlined. Subsequently, the nodes of the applications lying inside the outlined circle are selected as target applications.

Furthermore, the method comprises controlling display of the information related to the subject application on the user device using the at least one target application. The data processing arrangement is operable to control display of the information related to the subject arrangement on a user device using the at least one target application. The term "*user device*" as used herein above refers to an electronic device associated with (or used by) a given user that is capable of enabling the given user to perform specific tasks associated with the aforementioned method and system. Moreover, the user device is intended to be broadly interpreted to include any electronic device that may be used for voice and/or data communication over a wireless communication network. Additionally, the user device includes a casing, a memory, a processor, a network interface card, a microphone, a speaker, a keypad, and a display module. The user device is operable to store, operate and display the at least one target application. The user device is operable to display the information related to the subject application on the target application via the display module. Optionally, the user, when operating the target application, on the user device, receives and views the information related to the subject application via the display module. Optionally, the method is operable to control the displaying of the information related to the subject application. In an example, the method may control a timing of displaying of the information. In another example, the method may display the information after a certain user action. In another example, the method is operable to display the information on a specific portion of the display module. Optionally, the display module enables the user to click on the information related to the subject application. More optionally, the user upon clicking the information on the display module is given more information related to the subject application. In an example, the user upon clicking on the information is given an option to download the subject application from the publicly-accessible digital distribution platform.

In an embodiment, the method further comprises determining performance metrics of the at least one target application, wherein the performance metrics relate to the subject application. The term "*performance metrics*" as used herein refers to a parameter based on which a performance of the at least one target application is analysed. Moreover, the performance of the at least one target application refers to an extent of user intending to use the subject application via the target application. Optionally, the performance of the at least one target application is based on a number of times the subject application is downloaded by different users via clicking on the information related to the subject application available on the target application, or generated revenue from a given target application. Optionally, the at least one target application having users clicking on the information more than threshold number of clicks are termed as high performing target applications whereas the target applications having users clicking on the information less than threshold number of clicks are termed as low performing target applications.

In an embodiment, the method further comprises calibrating the distance metric based upon the performance metrics of the at least one target application to re-calculate the distance value of each of the applications in the group of applications from the subject application in the multi-dimensional space. As aforementioned, the distance value between two nodes (namely, the nodes representing the subject application and one of an application from the group of applications) in the multi-dimensional space varies based upon the distance metric used to calculated the distance value. Therefore, in case of a current distance metric employed in the method resulting in the generation of a greater number of low performing target applications, the distance metric is calibrated from the current distance metric to a second distance metric. Subsequently, the distance values calculated between the subject application and each of the applications in the group of applications using the second distance metric may vary. Consequently, the target applications for receiving the information may vary. Optionally, the distance metric may be calibrated iteratively till the budget allocated for the transmission of information to the at least one target application is used, or the information has been received by each of the applications in the group of applications, or the performance metrics for the subject application are optimised or the iterative process is manually terminated by a user of the system. In an example, the Manhattan distance with equal weight assigned to all application features is used as the current distance metric resulting in identification of twelve target applications. Upon analysis of the performance metrics of each of the twelve target applications, four target applications are determined as high-performing and the remaining eight are determined as low-performing. Therefore, the distance metric is calibrated to a second distance metric as the Euclidean distance with (for example 20% more importance) given into specific application features A, B and C in the distance calculation. In deed the calibration of the distance metrics is not only related to choosing different metrics but also related to given different weights to different features in the calculation. Subsequently, the target applications based on the second distance metric are identified and performance metrics of such target applications are analysed. Thereafter in the example, the distance metric is recalibrated in an iterative process till the performance metrics are optimised. In another example different weights might be applied to some of the application features.

The present disclosure also relates to the system as described above. Various embodiments and variants disclosed above apply *mutatis mutandis* to the method.

Optionally, the system comprising the data processing arrangement is further operable to determine performance metrics of the at least one target application, wherein the performance metrics relate to the subject application.

Optionally, the system comprising the data processing arrangement is further operable to calibrate the distance metric based upon the performance metrics of the at least one target application to re-calculate the distance value of each of the applications in the group of applications from the subject application in the multi-dimensional space.

Optionally, the system comprising the distance metric is one of: Manhattan distance, Euclidean distance, Chebychev distance, Mahalanobis distance, cosine distance, Minkowski distance. In additional embodiments other metrics can be also used.

Optionally, the system comprises of the information relating to the subject application comprising promotional content for the subject application.

### DETAILED DESCRIPTION OF THE DRAWINGS

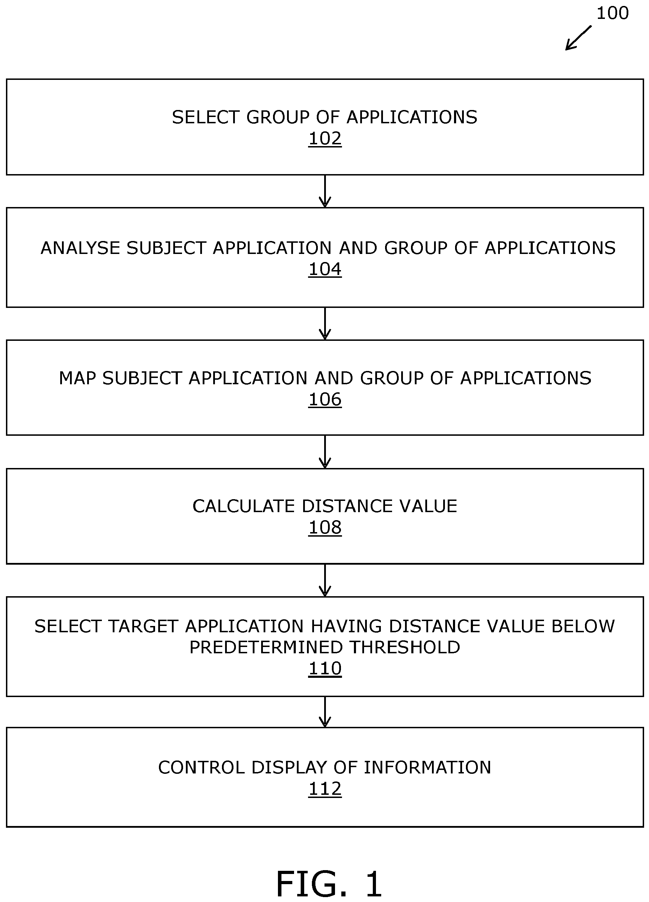

Referring to FIG. 1, illustrated is steps of a method **100** of identifying at least one target application for receiving information related to a subject application, in accordance with an embodiment of the present disclosure. At a step **102,** a group of applications is selected from a database arrangement. At a step **104,** the subject application and each of the applications in the group of applications are analysed to identify features related thereto. At a step **106,** the subject application and each of the applications in the group of applications are mapped in a multi-dimensional space based on the identified features thereof. At a step **108,** a distance value of each of the applications in the group of applications from the subject application is calculated in the multi-dimensional space, using a distance metric. At a step **110,** at least one target application having the distance value below a predetermined threshold is selected from the group of applications. At a step **112,** display of the information related to the subject application is controlled on a user device using the at least one target application.

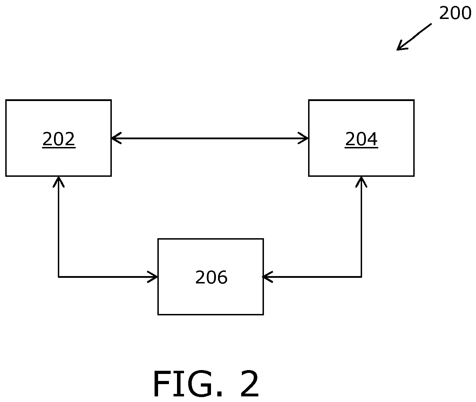

Referring to FIG. 2, there is shown a block diagram of a network environment **200,** wherein a system for identifying at least one target application for receiving information related to a subject application is implemented, in accordance with an embodiment of the present disclosure. The network environment **200** includes a data processing arrangement **202,** a database arrangement **204** and a user device **206.**

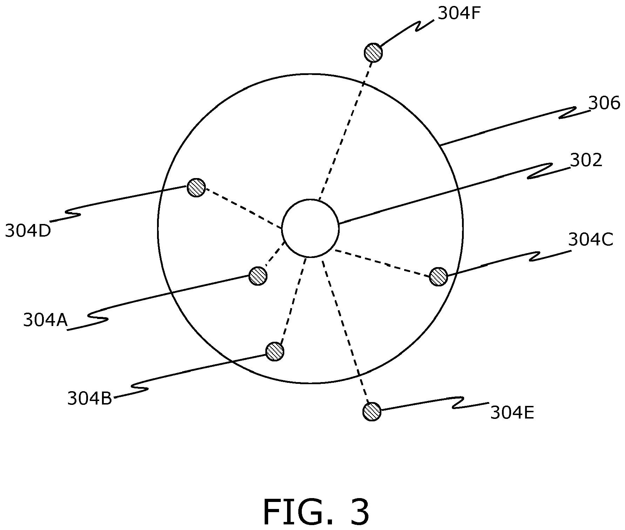

Referring to FIG. 3, there is shown an exemplary illustration of mapping of a subject application and the group of applications in a multi-dimensional space, in accordance with an exemplary implementation of the present disclosure. Herein as shown, the subject application, depicted as subject node **302** is designated as a central node, wherein group of applications are depicted as nodes **304A, 304B, 304C, 304D, 304E, 304F.** As shown, the applications from the group of applications lie at varying distances from the subject node **302.** In the exemplary implementation, the predetermined threshold is determined to be at a distance represented by the circle **306.** Consequently, the application lying at a distance value below the predetermined threshold are determined as the target applications. Therefore, in the exemplary implementation, the applications represented by nodes **304A, 304B, 304C** and **304D** are identified as target applications. The applications (not shown) outside of the circle **306** are not selected as the target applications.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method of identifying at least one target application (304A, 304B, 304C, 304D) for receiving information related to a subject application (302), wherein the subject application is to be promoted onto the at least one target application, the method comprising
- selecting a group of applications (304A, 304B, 304C, 304D, 304E, 304F) from a database arrangement (204);
- analysing the subject application and each of the applications in the group of applications to identify features related thereto;
- mapping the subject application and each of the applications in the group of applications in a multi-dimensional space based on the identified features thereof;
- calculating, in the multi-dimensional space, a distance value of each of the applications in the group of applications from the subject application using a distance metric;
- selecting, from the group of applications, the at least one target application having the distance value below a predetermined threshold; and
- controlling display of the information related to the subject application on a user device (206) using the at least one target application.

2. A method according to claim 1, wherein the method further comprises determining performance metrics of the at least one target application (304A, 304B, 304C, 304D), wherein the performance metrics relate to the subject application (302).

3. A method according to claim 2, wherein the method further comprises calibrating the distance metric based upon the performance metrics of the at least one target application (304A, 304B, 304C, 304D) to re-calculate the distance value of each of the applications in the group of applications (304A, 304B, 304C, 304D, 304E, 304F) from the subject application (302) in the multi-dimensional space.

4. A method according to any of the claims 1-3, wherein the distance metric is one of a: Manhattan distance, Euclidean distance, Chebychev distance, Mahalanobis distance, cosine distance, Minkowski distance.

5. A method according to any one the claim 1-4, wherein the information relating to the subject application (302) comprises promotional content for the subject application.

6. A system for identifying at least one target application (304A, 304B, 304C, 304D) for receiving information related to a subject application (302), wherein the subject application is to be promoted onto the at least one target application, the system comprising a data processing arrangement (202), wherein the data processing arrangement is operable to:
- select a group of applications (304A, 304B, 304C, 304D, 304E, 304F) from a database arrangement (204);
- analyse the subject application and each of the applications in the group of applications to identify features related thereto;
- map the subject application and each of the applications in the group of applications in a multi-dimensional space based on the identified features thereof;
- calculate, in the multi-dimensional space, a distance value of each of the applications in the group of applications from the subject application using a distance metric;
- select, from the group of applications, the at least one target application having the distance value below a predetermined threshold; and
- control display of the information related to the subject application on a user device (206) using the at least one target application.

7. A system according to claim 6, wherein the data processing arrangement (202) is further operable to determine performance metrics of the at least one target application (304A, 304B, 304C, 304D), wherein the performance metrics relate to the subject application (302).

8. A system according to claim 7, wherein the data processing arrangement (202) is further operable to calibrate the distance metric based upon the performance metrics of the at least one target application (304A, 304B, 304C, 304D) to re-calculate the distance value of each of the applications in the group of applications (304A, 304B, 304C, 304D, 304E, 304F) from the subject application (302) in the multi-dimensional space.

9. A system according to any of the claims 6-8, wherein the distance metric is one of a: Manhattan distance, Euclidean distance, Chebychev distance, Mahalanobis distance, cosine distance, Minkowski distance.

10. A system according to any one the claim 6-9, wherein the information relating to the subject application (302) comprising promotional content for the subject application.
